# EUROPEAN PATENT APPLICATION

(11) **EP 4 461 799 A1**
(43) Date of publication of application: **13.11.2024**
(21) Application number: 22918804.0
(22) Date of filing: 20.12.2022
(51) Int. Cl.: C12G 1/14, C12G 3/04, A23L 2/00, A23L 2/52, A23L 29/231, A23L 29/238, A23L 29/244, A23L 29/25, A23L 29/256, A23L 29/262, A23L 29/269

(54) **WINE-FLAVOURED BEVERAGE**

(30) Priority: 07.01.2022 JP 2022001698
(71) Applicant: Suntory Holdings Limited, Osaka 530-8203 (JP)
(72) Inventor: KATAOKA, Shun, Kawasaki-shi, Kanagawa 211-0067 (JP); NAKAMURA, Yuri, Kawasaki-shi, Kanagawa 211-0067 (JP)
(74) Representative: Vossius & Partner Patentanwälte Rechtsanwälte mbB
(86) International application number: PCT/JP2022/046770
(87) International publication number: WO 2023/132219

(57) **Abstract**

An object of the present invention is to impart richness and wine-like full body to a non-alcoholic or low-alcoholic wine flavor beverage. The viscosity and the sodium content of the beverage are adjusted.

## Description

### TECHNICAL FIELD

The present invention relates to a non-alcoholic or low-alcoholic wine flavor beverage, and a method relating thereto.

### BACKGROUND ART

Non-alcoholic or low-alcoholic beverages are popular particularly among young people nowadays. In such a trend, non-alcoholic or low-alcoholic wine flavor beverages are being developed.

For example, PTL 1 discloses a technique for providing a wine flavor beverage, particularly a non-alcoholic or low-alcoholic wine flavor beverage, that has improved and enhanced wine-like flavor by regulating the composition of organic acids to. PTL 2 discloses a technique for giving an impression of a fermented product to a wine flavor beverage by regulating the contents of specific higher alcohols and fatty acid esters.

### CITATION LIST

### PATENT LITERATURE

PTL 1: JP 2013-255490A
PTL 2: JP 2021-106526A

### SUMMARY OF INVENTION

### TECHNICAL PROBLEM

The non-alcoholic or low-alcoholic wine flavor beverages are unfortunately poor in richness and wine-like full body due to its smaller alcoholic strength. An object of the present invention is to impart richness and wine-like full body to a non-alcoholic or low-alcoholic wine flavor beverage.

### SOLUTION TO PROBLEM

The inventors of the present invention have found that richness can be imparted to a non-alcoholic or low-alcoholic wine flavor beverage by adjusting the viscosity of the beverage. Furthermore, the inventors of the present invention have also found that wine-like full body can be imparted to a non-alcoholic or low-alcoholic wine flavor beverage by adjusting the sodium content of the beverage so as to be within a certain range, thus achieving the present invention.

Specifically, the present invention relates to the following, but is not limited thereto.
[1] A wine flavor beverage having an alcohol content of less than 3 v/v%, a viscosity of 1.05 mPa·s or more at 20°C, and a sodium content of 70 to 950 mg/kg.
[2] The beverage according to [1], wherein a polysaccharide is one or more selected from the group consisting of xanthan gum, gellan gum, Agrobacterium succinoglycan, tamarind seed gum, guar gum, locust bean gum, gum arabic, karaya gum, pectin, cellulose, konjac mannan, soy polysaccharides, carrageenan, agar, alginic acid, carboxymethyl cellulose, and cationized guar gum.
[3] The beverage according to [1] or [2], wherein the polysaccharide is xanthan gum, and a content thereof is 3.80 to 51.80 mg/kg.
[4] The beverage according to any one of [1] to [3], wherein the viscosity at 20°C is 1.05 to 1.65 mPa·s.
[5] The beverage according to any one of [1] to [4], wherein the beverage has a Brix value of 5.8 or less.
[6] A method for imparting richness and wine-like full body to a wine flavor beverage having an alcohol content of less than 3 v/v%, the method comprising the step of mixing ingredients such that the beverage has a sodium content of 70 to 950 mg/kg and a viscosity of 1.05 mPa·s or more at 20°C.

### ADVANTAGEOUS EFFECTS OF INVENTION

The present invention can impart wine-like full body to a non-alcoholic or low-alcoholic wine flavor beverage. Herein, "wine-like full body" means to have depth, body, richness, and thickness like those of an alcoholic beverage and also to give soft mouthfeel and refreshing aftertaste. The soft mouthfeel and refreshing aftertaste are features of the wine-like full body other alcoholic beverages do not have.

### DESCRIPTION OF EMBODIMENTS

The beverage of the present invention and a method relating thereto will be described below. Unless otherwise noticed, "ppm" as used herein means ppm in terms of weight/volume (w/v), which has the same meaning as of "mg/L."

### (Wine flavor beverage)

The present invention relates to a wine flavor beverage having an alcohol content of less than 3 v/v%.

The "wine flavor beverage" herein refers to a beverage having wine-like flavor. The "wine" herein means an alcoholic beverage that is produced by fermenting mainly grape juice.

The wine flavor beverage of the present invention may be a beverage that has undergone fermentation by yeast or may not, as long as it has wine flavor. It may be a beverage that has undergone fermentation by a microorganism other than yeast, such as Lactic acid bacteria and oil-producing bacteria. It may also contain alcohol or may not. Examples of such beverages include a beverage containing wine; a beverage containing a wine extract obtained by concentrating wine; a beverage obtained by dealcoholization of wine and a beverage containing it; a beverage obtained by lactic fermentation of a fruit juice and a beverage containing it; and a beverage that imitates a taste of wine with a flavoring agent without use of wine or a wine extract. The method for producing the beverage and the ingredients and materials of the beverage are not particularly limited as long as the beverage has wine flavor.

The wine flavor beverage may be a beverage with red wine flavor or a beverage with white wine flavor. In either case, wine-like full body enhances the wine-likeness.

### (Alcohol)

Herein, the alcohol refers to ethyl alcohol (ethanol), unless otherwise noticed.

The wine flavor beverage of the present invention is a low-alcoholic or non-alcoholic beverage, and has an alcohol content of less than 3 v/v%. The alcohol content may be 2 v/v% or less, 1 v/v% or less, or 0.00 v/v%.

The alcohol content in the present invention may be measured by any known method, for example, with a vibrating densimeter. Specifically, carbon dioxide is removed from the beverage by filtration or ultrasonic waves as needed to prepare a sample. The sample is subjected to steam distillation. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007). Alternatively, the alcohol content may be measured using gas chromatography, in cases where the content is extremely small.

Any liquor can be used as a source of the alcohol for the beverage of the present invention. The liquor that can be used for this purpose is not particularly limited as long as it is drinkable as a general liquor, and examples thereof include distilled liquors such as whiskey, vodka, rum, shochu, and spirits; brewed beverage such as sake, wine, and beer; and mixed liquors such as liqueur.

### (Viscosity)

The beverage of the present invention has a viscosity of 1.05 mPa·s or more at 20°C. The viscosity may be 1.05 to 1.65 mPa·s, 1.10 to 1.60 mPa·s, or 1.10 to 1.45 mPa·s. A viscosity within the above-described range can impart richness to a non-alcoholic or low-alcoholic wine flavor beverage.

The method for adjusting the viscosity of the beverage of the present invention is not particularly limited, and in one embodiment, the viscosity can be adjusted by incorporating a polysaccharide into the beverage. Accordingly, the beverage of the present invention may include a polysaccharide. In one embodiment, the polysaccharide herein refers to those conventionally used for imparting the viscous property to foods, stabilizing milk, or making a gel. In cases where two or more polysaccharides are used for the purpose of thickening, they can be represented by an abbreviated name, polysaccharide thickener.

As the polysaccharide, those that are food additives can be used. In the beverage of the present invention, the type of the polysaccharide is not particularly limited, and examples thereof include xanthan gum, gellan gum, Agrobacterium succinoglycan, tamarind seed gum, guar gum, locust bean gum, gum arabic, karaya gum, pectin, cellulose, konjac mannan, soy polysaccharides, carrageenan, agar, alginic acid, carboxymethyl cellulose, and cationized guar gum. It is preferable to use xanthan gum.

The polysaccharide content of the beverage of the present invention is not particularly limited, and for example, in cases where xanthan gum is used as the polysaccharide, the content thereof is 3.80 to 51.80 mg/kg, preferably 3.80 to 45.00 mg/kg, and more preferably 3.80 to 40.00 mg/kg. In cases where xanthan gum is used as the polysaccharide, richness of the non-alcoholic or low-alcoholic wine flavor beverage may be insufficient if the content thereof is less than 3.80 mg/kg, and it is difficult to drink due to too much a viscous property imparted if the content is more than 51.80 mg/kg.

### (Sodium)

The beverage of the present invention includes sodium. The sodium content of the beverage of the present invention is 70 to 950 mg/kg. The content may be 100 to 800 mg/kg, 150 to 700 mg/kg, or 200 to 600 mg/kg. For the lower limit, the content may be 100 mg/kg or more, 150 mg/kg or more, 200 mg/kg or more, or 250 mg/kg or more, in one embodiment. A sodium content within an appropriate range can impart wine-like full body to a non-alcoholic or low-alcoholic wine flavor beverage.

In the present invention, it is possible to add to the beverage sodium in the form of a salt that can be used for beverages and foods. Examples of the salt for incorporating sodium into the beverage of the present invention include trisodium citrate, sodium chloride, sodium gluconate, monosodium succinate, disodium succinate, sodium acetate, sodium DL-tartrate, sodium L-tartrate, sodium lactate, monosodium fumarate, and sodium DL-malate. Thus, in one embodiment, the beverage of the present invention contains one or more substance selected from the group consisting of trisodium citrate, sodium chloride, sodium gluconate, monosodium succinate, disodium succinate, sodium acetate, sodium DL-tartrate, sodium L-tartrate, sodium lactate, monosodium fumarate, and sodium DL-malate.

To add sodium to the beverage, an ingredient containing sodium or a sodium salt may be added to the beverage, including fruit juice, vegetable juice, natural water, and deep sea water.

In cases where the sodium contained in the present invention is in the form of a sodium salt, its amount can be converted into the amount of its free form to calculate the sodium content of the beverage. The sodium content or concentration of the beverage (solution as a sample) of the present invention can be measured by a known method using an ICP emission spectrophotometer.

### (Brix)

The term "Brix" herein means the weight (g) of dissolved solids per 100 g of solution, which is generally determined by measuring a refractive index at 20°C using, for example, a saccharimeter or refractometer and converting it to a mass/mass percentage of a sucrose solution on the basis of the conversion table according to ICUMSA (International Commission for Uniform Methods of Sugar Analysis). A smaller Brix value of a beverage means a smaller concentration of dissolved solids including carbohydrates.

In a preferable embodiment, the beverage of the present invention has a smaller carbohydrate content, and its Brix is 5.8 or less, 5.0 or less, or 4.5 or less. The lower limit is not particularly critical, and may be, for example, 1.0, 1.5, 2.0, 2.5, or 3.0. A preferred example of the range of the Brix value is 2.5 to 5.8, or 3.0 to 5.0. A beverage having such a small carbohydrate content generally tends to have insufficient full body; however, the present invention can provide excellent wine flavor in such cases.

### (Carbon dioxide)

The beverage of the present invention may contain carbon dioxide. The carbon dioxide can be introduced into the beverage by a general method known to those skilled in the art. For example, carbon dioxide may be dissolved in the beverage under pressure; carbon dioxide may be mixed with the beverage in a line using a mixer such as a carbonator available from GEA Tuchenhagen; the beverage may be sprayed into a tank filled with carbon dioxide so that the beverage absorbs the carbon dioxide; or the beverage may be mixed with carbonated water; however, the method is not limited thereto. The carbon dioxide pressure is adjusted by using these means as appropriately.

In cases where the beverage of the present invention contains carbon dioxide, the carbon dioxide pressure thereof is not particularly limited, and preferably 0.7 to 4.5 kgf/cm², more preferably 0.8 to 2.8 kgf/cm². In the present invention, the carbon dioxide pressure can be measured using a gas volume analyzer GVA-500A manufactured by KYOTO ELECTRONICS MANUFACTURING CO., LTD. For example, the temperature of a sample is adjusted to 20°C; in the gas volume analyzer, air is removed (sniffed) from the container, followed by shaking; and then the carbon dioxide pressure is measured. Unless otherwise noticed, the carbon dioxide pressure herein means a carbon dioxide pressure at 20°C.

### (Other ingredients)

In addition, any additives commonly incorporated into beverages may be incorporated into the beverage of the present invention, including flavors, vitamins, dyes, antioxidants, preservatives, seasonings, extracts, pH adjusters, citric acid, and quality stabilizers, as long as they do not impair the effect of the present invention.

In one embodiment, the beverage of the present invention is free of any high-intensity sweetener, or has a content thereof as small as possible, in view of pursuing a more natural taste. For example, the high-intensity sweetener content of the beverage may be 110 ppm or less. This concentration can be measured by a known method such as HPLC method.

The term "high-intensity sweetener" as used herein encompasses natural sweeteners and synthesized sweeteners that have a stronger sweetness than sucrose (for example, that is several to several hundred times sweeter than sucrose). Examples of such a high-intensity sweetener include peptide sweeteners, such as aspartame and allitame; glycoside sweeteners, such as stevia sweeteners (including stevia extract, and enzymatically treated stevia obtained by enzymatically treating stevia and adding glucose to the resultant, and Rebaudioside A, which has the best sweetness among sweet components of stevia) and Glycyrrhiza extract; sucrose derivatives, such as sucralose; and synthetic sweeteners, such as acesulfame K and saccharin.

### (Packed beverage)

The beverage of the present invention can be provided in a packed form. Examples of the form of a container for packing include, but not limited to, a metal container such as a can, a PET bottle, a paper container, a bottle, and a pouch. A sterilized and packed product can be produced by, for example, a method including filling the beverage of the present invention into a container and then carrying out heat sterilization such as retort sterilization, or a method including sterilizing the beverage and then filling it into a container.

### (Method)

In another aspect, the present invention is a method for producing a wine flavor beverage. The method includes the step of mixing ingredients such that the beverage has a sodium content of 70 to 950 mg/kg and a viscosity of 1.05 mPa·s or more at 20°C. The ingredients include a sodium-containing material (such as a sodium salt or a fruit juice), and optionally polysaccharide and water. Other ingredients are obvious from the description for the beverage hereinabove. This method can impart richness and wine-like full body to a wine flavor beverage having an alcohol content of less than 3 v/v%, and accordingly, in another aspect, the method is also a method for imparting richness and wine-like full body to the above-described beverage.

The method for adjusting the viscosity and the sodium content of the beverage is obvious from the description for the beverage hereinabove. The timing thereof is not limited. For example, the above-described steps may be carried out simultaneously or separately, or the steps may be swapped for each other in the order. The beverage finally obtained may satisfy the above-described requirements. The preferred ranges of the contents of the above-described ingredients, etc. are as described above for the beverage. Specific examples and amounts of other additional ingredients and parameters are also as described above for the beverage.

### (Numeric range)

For the sake of clearness, a numeric range herein includes its limits, or in other words, the lower limit and the upper limit. For example, a range represented by " 1 to 2" includes 1 and 2.

### EXAMPLES

The contents of the present invention will now be described in detail by way of Examples of the present invention, but the present invention is not limited to Examples below.

### Example 1: Problems with non-alcoholic wine flavor beverage in terms of richness and full body, and influence of sodium

First, with water were mixed a given amount of a wine extract (obtained from white wine: 1 g/kg sample of the resulting beverage), a sodium salt (trisodium citrate), a magnesium salt (magnesium chloride), a polysaccharide (xanthan solution), an acidifier (malic acid), a flavoring agent, and a sweetener (sucrose) to prepare beverage samples according to the formulations shown in Table 1 below. Since trisodium citrate and magnesium chloride each have a smaller impact of the taste of the salt itself, they were selected and used as the sodium salt and magnesium salt for the experiment as described above. In each beverage sample, the alcohol content was 0.00 v/v%, the acidity (in terms of tartaric acid) was 0.40 g/100 ml, and the Brix was about 3.1.

On the beverages obtained, sensory evaluation was made by trained specialist members of a panel to evaluate "richness" and "wine-like full body" of each beverage sample. For each evaluation item, the specialist members rated samples on a 5-point scale (the best was given a score of 5, and the worst was given a score of 1), and the average was obtained from the resulting evaluation scores for each evaluation item. For both "richness" and "wine-like full body," an average of 2.5 or more was regarded as a passing score. Results are shown in Table 1. In order to reduce differences in evaluations among individuals, the specialist members established a common perception of the relationship between the evaluation scores and tastes in advance, using standard samples corresponding to respective evaluation scores.

**[Table 1]**

| Beverage sample | 1 | 2 | 3 | 4 | 5 | 6 | 7 | 8 |
|---|---|---|---|---|---|---|---|---|
| Sodium content [mg/kg] | 400 | 400 | 120 | 400 | 400 | 60 | 120 | 200 |
| Viscosity [mPa·S](20°C) | 1.00 | 1.05 | 1.10 | 1.10 | 1.20 | 1.45 | 1.45 | 1.45 |
| Richness | 2.00 | 3.50 | 3.00 | 3.75 | 3.75 | 2.00 | 3.00 | 3.50 |
| Wine-like full body | 2.00 | 2.50 | 2.50 | 2.75 | 3.00 | 2.75 | 3.25 | 3.25 |

| Beverage sample | 9 | 10 | 11 | 12 | 13 | 14 | 15 |
|---|---|---|---|---|---|---|---|
| Sodium content [mg/kg] | 230 | 300 | 400 | 800 | 1000 | 1500 | 1000 |
| Viscosity [mPa·S](20°C) | 1.45 | 1.45 | 1.45 | 1.45 | 1.45 | 1.45 | 1.7 |
| Richness | 3.50 | 4.00 | 4.25 | 3.00 | 2.75 | 2.00 | 2.00 |
| Wine-like full body | 3.25 | 3.50 | 3.75 | 3.25 | 2.25 | 1.50 | 2.50 |

It was first found that a wine flavor beverage having a lower viscosity had insufficient richness (see beverage sample 1), and that a wine flavor beverage having a sodium content out of 70 to 950 mg/kg lacked richness and wine-like full body (see beverage samples 6 and 13 to 15). It was shown that it was possible to enhance the wine-like full body of such a beverage by adjusting the viscosity to 1.05 mPa·s or more and the sodium content so as to be within a range from 70 to 950 mg/kg (see beverage samples 2 to 5 and 7 to 12).

Example 2: Influence of viscosity and sodium content on richness and full body of low-alcoholic wine flavor beverage

A commercially available red wine and white wine made in Chile were each about 13-fold diluted to adjust the alcohol content to about 1.0 v/v%. Then, to each of the diluted wines (red and white) were added a sodium salt (trisodium citrate), a magnesium salt (magnesium chloride), a polysaccharide (xanthan solution), an acidifier (malic acid), and a sweetener (sucrose) to prepare beverage samples according to the formulations shown in Table 2 below. In each sample, the acidity (in terms of tartaric acid) was 0.40 g/100 ml, and the Brix was about 3.6. Then, on the beverages obtained, sensory evaluation was made in the same manner as in Example 1. Results are shown in Table 2.

**[Table 2]**

| Beverage sample | Red wine-based | | White wine-based | |
|---|---|---|---|---|
| | 16 | 17 | 18 | 19 |
| Sodium content [mg/kg] | 60 | 400 | 60 | 400 |
| Viscosity [mPa·S](20°C) | 1.45 | 1.45 | 1.45 | 1.45 |
| Richness | 2.25 | 4.00 | 2.25 | 3.75 |
| Wine-like full body | 2.50 | 4.00 | 3.25 | 4.00 |

It was shown that it was possible to enhance richness of the beverage and, at the same time, to impart wine-like full body also to a low-alcoholic wine flavor beverage by adjusting the viscosity and the sodium content so as to be within respective certain ranges as in Example 1 (see beverage samples 17 and 19). It was also found that the similar results were obtained for both a white wine-based beverage and a red wine-based beverage.

## Claims

1. A wine flavor beverage having an alcohol content of less than 3 v/v%, a viscosity of 1.05 mPa·s or more at 20°C, and a sodium content of 70 to 950 mg/kg.

2. The beverage according to claim 1, wherein a polysaccharide is one or more selected from the group consisting of xanthan gum, gellan gum, Agrobacterium succinoglycan, tamarind seed gum, guar gum, locust bean gum, gum arabic, karaya gum, pectin, cellulose, konjac mannan, soy polysaccharides, carrageenan, agar, alginic acid, carboxymethyl cellulose, and cationized guar gum.

3. The beverage according to claim 1 or 2, wherein the polysaccharide is xanthan gum, and a content thereof is 3.80 to 51.80 mg/kg.

4. The beverage according to any one of claims 1 to 3, wherein the viscosity at 20°C is 1.05 to 1.65 mPa·s.

5. The beverage according to any one of claims 1 to 4, wherein the beverage has a Brix value of 5.8 or less.

6. A method for imparting richness and wine-like full body to a wine flavor beverage having an alcohol content of less than 3 v/v%, the method comprising
the step of mixing ingredients such that the beverage has a sodium content of 70 to 950 mg/kg and a viscosity of 1.05 mPa·s or more at 20°C.
